# EUROPEAN PATENT APPLICATION

(11) **EP 1 330 138 A2**
(43) Date of publication of application: **23.07.2003**
(21) Application number: 02027436.1
(22) Date of filing: 09.12.2002
(51) Int. Cl.: H04Q 7/38

(54) **Dynamic group calling mechanism**

(30) Priority: 17.01.2002 GB 0201017
(71) Applicant: MOTOROLA, INC., Schaumburg, IL 60196 (US)
(72) Inventor: Valentine, Stephen, Basingstoke, Hampshire RG22 4PD (GB)
(74) Representative: Treleven, Colin

(57) **Abstract**

A method of providing a communication link in a radio communication system (100) that supports a number of communication cells. Each cell provides communication from respective serving communication units (112-132) to a number of remote communication units (112-116) operating in a respective cell. The method includes the steps of assigning (308) dynamically a location specific group identification code to a group of communication units based upon said communication units' location or cell within the radio communication system; and providing group communication to said group of remote communication units only within said remote communication units' location or cell.

This provides the advantage that there is no requirement to re-program communication units with specific call areas, as call area definition is centrally controlled. In addition, the method supports selective calling within dynamically defined call areas.

## Description

### Field of the Invention

This invention relates to the provision of a group communication to, or between, communication units operating in a specific location. In particular, the invention is applicable to, but not limited to, private/public access mobile radio systems such as TETRA, APCO 25, Tetrapol™ and UMTS dispatch/group services.

### Background of the Invention

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs). The term mobile station generally includes both hand-portable and vehicular-mounted radio units.

The communication link from a BTS to an MS is generally referred to as a downlink communication channel. Conversely, the communication link from a MS to a BTS is generally referred to as an up-link communication channel.

Wireless communication systems are distinguished over fixed communication systems, such as the public switched telephone networks (PSTN), principally in that mobile stations move between service providers (and/or different BTS) and in doing so encounter varying radio propagation environments.

In a wireless communication system, each BTS has associated with it a particular geographical coverage area (or cell). The coverage area defines a particular range over which the BTS can maintain acceptable communications with MSs operating in its serving cell. Often these cells are arranged to be combined to produce an expanded system coverage area, with the infrastructure supporting respective cells interconnected via centralised switching equipment. Furthermore, cells are often grouped into location areas, for example for the purpose of tracking an MS within the coverage area whilst minimising location-updating signalling.

Mobile cellular and trunked radio systems typically allocate a broadcast information radio channel that is used to provide general system information to all mobile stations within the coverage area of the system. Within such broadcast channels, each of the base transceiver stations broadcast information pertinent to the cell that they serve, as well as information about neighbouring cells. The serving cell information is then used by mobile stations receiving the information to select the optimum cell for access to the system.

It is also known that radio frequency (RF) resources, such as bandwidth, are limited. Transmission of broadcast information on a signalling channel clearly takes up bandwidth that could be used for other control channel signalling and user traffic. As the broadcast channel is generally allocated a limited resource, it is desirable to optimise the use of that resource, i.e. bandwidth, available for broadcast information.

In the field of this invention it is known that both the TErrestrial Trunked RAdio (Tetra) private/public mobile radio (PMR) standard, as well as other PMR systems, provide for broadcast (point-to-multipoint) based communications. One subset of point-to-multipoint communications in trunked PMR communication systems is group calls, whereby specific groups of users within the system are allocated a talk-group identification (TGID) code.

Communication between the group communication units takes place between those units who have been previously allocated the specific TGID for their group, and who set the address field of the proposed communication to that of the TGID. In all known PMR systems the group addresses used to support talk-group communications are defined in the central network. In some radio systems, the cells employed to support group calls are dynamically assigned, whereas other radio systems employ fixed predefined areas or cells for group calls.

In the TErrestrial Trunked RAdio (Tetra) private/public mobile radio (PMR) standard, an 'area selection' field has been implemented to support cell-specific communication. However, Tetra is an open communication standard that requires inter-operability between many different manufacturers and equipment suppliers. At the present time, there has been no agreement on how best to implement cell specific communication using the 'area selection' field.

The only currently used communication is to all MS within the system. Such a communication uses a broadcast service with a default address in the area selection field of all '1's, to identify the communication as being to all MS active in the radio system. However, such a limited approach does not allow selective broadcast communications to be made to a specific user within a defined call area.

Hence, the inventor of the present invention has recognised that the need for a flexible location specific calling mechanism requires an alternative solution to the area selection field approach, in order to alleviate some of the abovementioned limitations and disadvantages.

### Statement of Invention

In accordance with a first aspect of the present invention there is provided a method of providing a communication link in a radio communication system, as claimed in claim 1.

In accordance with a second aspect of the present invention there is provided a storage medium storing processor-implementable instructions, as claimed in claim 10.

In accordance with a third aspect of the present invention there is provided a communication unit, as claimed in claim 11.

In accordance with a fourth aspect of the present invention, there is provided a communication system, as claimed in claim 12.

Further aspects of the invention are provided in the dependent claims.

In summary, a means of generating and distributing location-specific group call identification codes is used to partition geographic locations or cells within the radio communication system to facilitate area (or location) specific communication.

### Brief Description of the Drawings

Exemplary embodiments of the present invention will now be described, with reference to the accompanying drawings, in which:
FIG. 1 shows a block diagram of a trunked radio communication system adapted to support the various inventive concepts of a preferred embodiment of the present invention.
FIG. 2 shows a block diagram of a radio communication unit adapted to support the various inventive concepts of the preferred embodiment of the present invention.
FIG. 3 shows a flow chart illustration of a method of generating and distributing location-specific group call identification codes, in accordance with the preferred embodiment of the present invention.

### Description of Preferred Embodiments

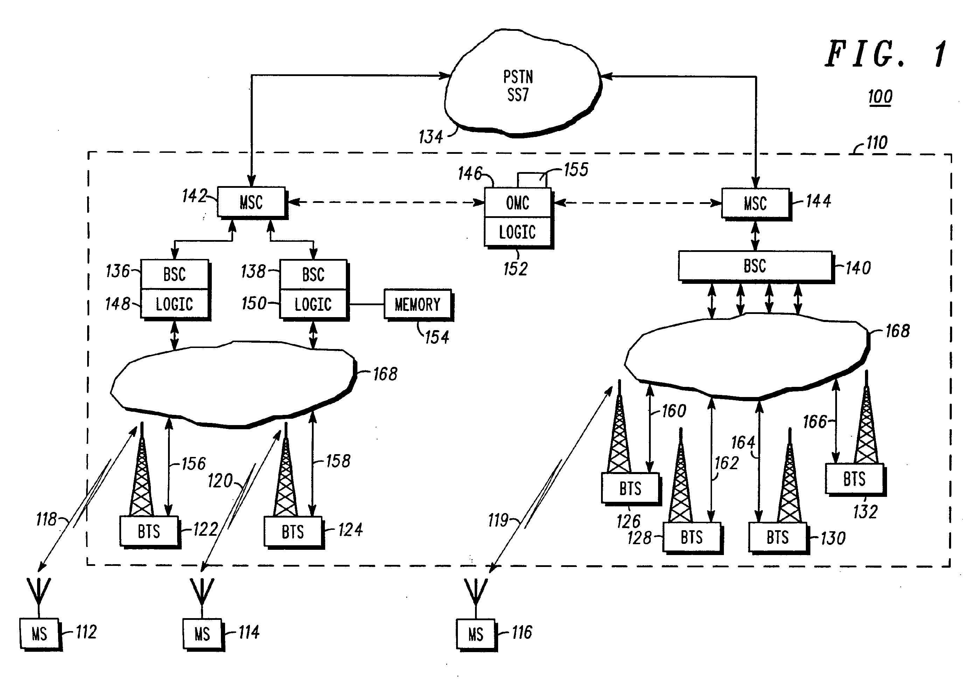

Referring first to FIG. 1, a trunked radio communications system 100, supporting a TErrestrial Trunked RAdio (TETRA) air-interface is shown, in outline, in accordance with a preferred embodiment of the invention. The European Telecommunications Standards Institute (ETSI) has defined the TETRA air-interface. Generally, the air-interface protocol is administered from,base transceiver sites that are geographically spaced apart - one base site supporting a cell (or, for example, sectors of a cell).

A plurality of subscriber units, such as a mixture of MSs 112-116 and fixed terminals (not shown), communicate over the selected air-interface 118-120 with a plurality of base transceiver stations (BTS) 122-132. A limited number of MSs 112-116 and BTSs 122-132 are shown for clarity purposes only.

The system infrastructure in a TETRA system is generally referred to as a switching and management infrastructure (SwMI) 110, which substantially contains all of the system elements apart from the MSs 112-116. The BTSs 122-132 may be connected to a conventional public-switched telephone network (PSTN) 134 through base station controllers (BSCs) 136-140 and mobile switching centres (MSCs) 142-144.

Each BTS 122-132 is principally designed to serve its primary cell, with each BTS 122-132 containing one or more transceivers. The BTSs 122-132 communicate 156-166 with the rest of the trunking system infrastructure via a frame relay interface 168.

Each BSC 136-140 may control one or more BTSs 122-132, with BSCs 136-140 generally interconnected through MSCs 142-144. Each BSC 136-140 is therefore able to communicate with one another, if desired, to pass system administration information therebetween. The BSCs 136-140 are responsible for establishing and maintaining control channel and traffic channels to serviceable MSs 112-116 that are affiliated therewith. The interconnection of BSCs 136-140 therefore allows the trunked radio communication system to support handover of the MSs 112-116 between cells.

Each MSC 142-144 provides a gateway to the PSTN 134, with MSCs 142-144 interconnected through an operations and management centre (OMC) 146 that administers general control of the trunked radio system 100, as will be understood by those skilled in the art. The various system elements, such as BSCs 136-138 and OMC 146, will include control logic 148-152, with the various system elements usually having associated memory 154 (shown only in relation to BSC 138 for the sake of clarity). The memory 154 typically stores historically compiled operational data as well as in-call data, system information, control algorithms and neighbour cell information.

In a first embodiment of the invention, one or more BTS(s) 122-132 assigns, for each location area (consisting of single or multiple cells), one or more talk-group identification (TGID) codes that are only valid within that specified location area. This means that, for one or more talk-groups, limited group calls are arranged such that the group calls can only take place in one or more specific cells or locations that constitute a subset of the system's coverage area.

In the context of the present invention, one or more BTS(s) 122-132 has/have been therefore adapted to generate and administer one or more talk-group identification (TGID) codes for location-specific group calling. However, it is within the contemplation of the invention that the generation one or more talk-group identification (TGID) codes, and administering processes associated therewith, may be incorporated into a MSC, BSC or OMC. Alternatively, such functions and processes may be distributed between a number of such infrastructure elements in the system architecture.

In operation, a MS 112-116 entering a cell or site for the first time will attach or register to the system in a manner consistent with that communication system, as known to those skilled in the art. The system, on receiving an attachment request from a MS 112-116, will then either accept or reject the request, dependent upon the specific attributes of the MS. If the request is valid, the MS will be attached to that cell and have access to wide-area services, such as the location-specific talk-group calls.

In a first embodiment of the present invention, a BTS 122-132 would, in response to accepting the MS onto the system, send to the attaching MS the group address of the area TGID codes, for example using the dynamic group number assignment (DGNA) signalling supported by the Tetra air-interface. As mentioned, the talk-group may be site-specific or cell-specific or consist of multiple cells or radio sites within the system. In addition, or in the alternative, it is envisaged that the location-specific group call may be served by a sector of a cell, using, for example, a sectored antenna arrangement.

In a preferred implementation of the above inventive concepts, it is proposed that the location-specific talk-group code(s) is/are assigned in such a manner that it/they is/are only valid whilst the MS remains within the current serving cell. In this context, the MS adds the assigned location-specific TGID code(s) to its current talk-group scan list. The assigned location-specific TGID code(s) would be removed from the MS scan list when the MS moves out of the existing cell and attaches to another cell. An MS moving to another cell or system may then repeat the aforementioned registration operation, and it would be assigned one or more new TGID code(s) appropriate to the new cell or system.

Advantageously, with this approach, a group call made using the channel indicated in the location-specific TGID code(s) will only be provided to those radio users currently operating within that specified area.

It is within the contemplation of the invention that the signalling messages used to initiate a location-specific talk-group call may either be:
(i) Sent on the main control channel (MCCH) of each site within the area, such that it is received only by MSs in idle mode, or
(ii) Sent on all channels within the defined area such that all MSs within the area can participate in the call.

Furthermore, this approach also allows the system operator to change the definition of system calling areas and area talk-groups centrally and dynamically, to meet the changing operational needs of the system. In prior art systems, such dynamic group call management is problematic with a need to recall active MSs from the field for re-programming, or conducting multiple over-the-air-programming (OTAP) of the active MSs.

In particular, with open communication standards where interoperability with many other manufacturers of radio equipment is mandatory, the aforementioned location-specific talk-group ID codes mechanism is compliant with current group address protocols. This is in contrast to the current focus in the TETRA open communication standard for providing an additional 'area selection' field, which is more cumbersome, more difficult to manage, less flexible and more difficult to standardise between many manufacturers.

In addition, the inventor of the present invention envisages that the inventive concepts described herein provide a substantial benefit in the dynamic management of system resources by allowing segregation of the MS user community within one or more cells. The segregation is achieved by allocating different area TGID codes based upon currently selected codes or MS IDs.

A skilled artisan would recognise that the architecture of the preferred embodiment may be adapted in many ways, dependent upon the services and applications to be provided by the communication system. Also, future developments, for example incorporating packet-based transmissions, may affect the configuration of, and interaction between, the particular elements. It is envisaged that the inventive concepts of the present invention can be readily applied to any current or future alternative configuration.

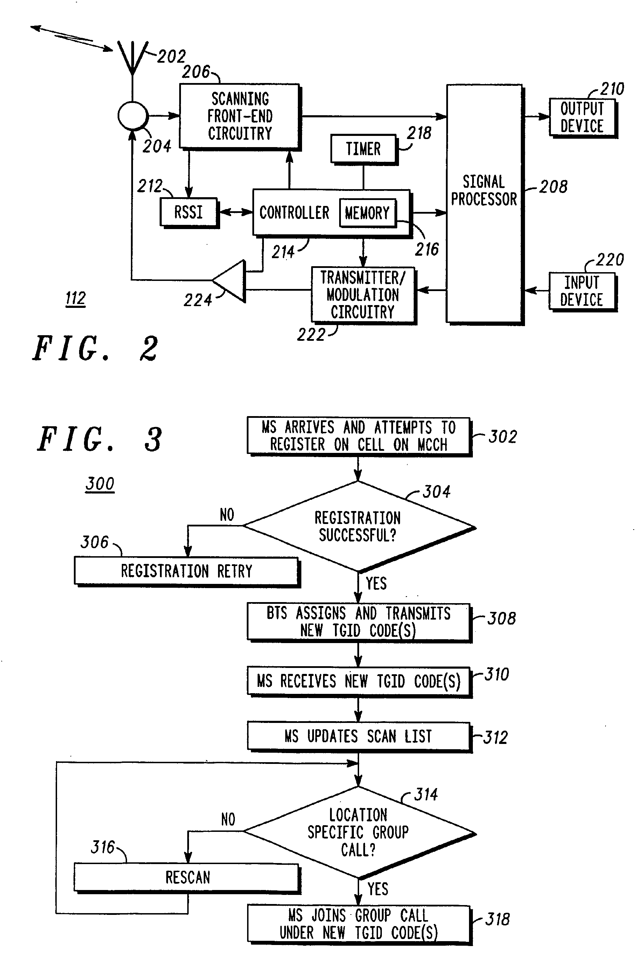

Referring now to FIG. 2, a block diagram of a subscriber unit/mobile station (MS) 112 adapted to support the inventive concepts of the preferred embodiments of the present invention is shown.

The MS 112 contains an antenna 202 preferably coupled to a duplex filter or circulator 204 that provides isolation between receive and transmit chains within MS 112.

The receiver chain includes scanning receiver front-end circuitry 206 (effectively providing reception, filtering and intermediate or base-band frequency conversion). The scanning front-end circuit 206 scans signal transmissions from its associated BTS and perhaps any direct-mode (DM) call set-up messages from other MS in its talk group.
The scanning front-end circuitry 206 is serially coupled to a signal processing function (processor, generally realised by a DSP) 208.

In accordance with a preferred embodiment of the invention, the receiver chain 210, in particular the signal processing function 208, coupled to the scanning front-end circuit 206, has been adapted for a receiving MS to adapt its scan list in accordance with the transmission from say, the MCCH, to accommodate the one or more dynamically adjustable location-specific TGID code(s). In this manner, the MS 112 can participate in talk-group calls that are appropriate and/or relevant in specific geographical areas.

A controller 214 is operably coupled to the scanning front-end circuitry 206 so that the receiver can calculate receive bit-error-rate (BER) or frame-error-rate (FER) or similar link-quality measurement data from recovered information via a received signal strength indication (RSSI) 212 function. The RSSI 212 function is operably coupled to the scanning front-end circuit 206. The memory device 216 stores a wide array of MS-specific data, such as decoding/encoding functions, neighbour and serving cell information relating to timing, frequency channels, power control and the like, as well as the TGID codes to be scanned when in a particular cell.

A timer 218 is operably coupled to the controller 214 to control the timing of operations, namely the transmission or reception of time-dependent signals, within the MS 112. As known in the art, received signals that are processed by the signal processing function are typically input to an output device 210, such as a speaker or visual display unit (VDU).

In this case, when the MS 112 enters in and is registered on a new cell, its new serving BTS transmits, in response to a successful registration, the new TGID code(s) to the MS 112. Hence, in the context of the preferred embodiment of the present invention, the memory device 216 is adapted to store new TGID code(s), as provided by its new serving BTS via processor 208.

As regards the transmit chain, this essentially includes an input device 220, such as a microphone, coupled in series through the signal processor 208, transmitter/modulation circuitry 222 and a power amplifier 224. The processor 208, transmitter/modulation circuitry 222 and the power amplifier 224 are operationally responsive to the controller, with an output from the power amplifier coupled to the duplex filter or circulator 204, as known in the art.

The transmit chain in MS 112, has been adapted to request and/or participate in a location-specific group call using the one or more assigned TGID codes. Such a request is preferably made by transmitting a signalling message on the uplink-signalling channel.

As known in the art, substantially the same circuitry of FIG. 2 is contained within the serving communication unit/BTS 122-132, albeit with some circuits being multiplied in terms of processing power, higher output power for transmission to multiple remote communication units, multiple signal paths for receiving signals from multiple remote communication units, etc. As such, when the circuitry in FIG. 2 is applied to a serving BTS, the serving BTS has an adapted processor/controller arrangement to generate and manage the location-specific TGID code(s) according to the preferred embodiment of the present invention.

In either the MS 112, or the BTS 122-132, the signal processor function 208 in the transmit chain may be implemented as distinct from the processor in the receive chain. Alternatively, a single processor 208 may be used to implement the processing of both transmit and receive signals, as shown in FIG. 2.

Of course, the various components within the MS 112 or a similar BTS 122-132 can be realised in discrete or integrated component form. Furthermore, it is within the contemplation of the invention that MS 112 may be any device that requires group-type communications, such as a portable or mobile PMR radio, a mobile phone, a personal digital assistant,or a number of wirelessly interconnectable laptop computers.

More generally, the functionality associated with generating, administering and utilising location-specific TGID codes may be implemented in a respective communication unit (BTS, MS) in any suitable manner. For example, new apparatus may be added to a conventional communication unit, or alternatively existing parts of a conventional communication unit may be adapted, for example by reprogramming one or more processors therein. As such, the required adaptation may be implemented in the form of processor-implementable instructions stored on a storage medium, such as a floppy disk, hard disk, PROM, RAM or any combination of these or other storage multimedia.

Referring now to FIG. 3, a flowchart 300 illustrates a method for generating and distributing location-specific group call identification codes, in accordance with the preferred embodiment of the present invention.

Once an MS arrives in a cell, the MS 112 attempts to register with the serving BTS on the main control channel (MCCH), as shown in step 302. If the registration attempt is not successful, in step 304, a registration re-try may be performed, as shown in step 306.

If the registration is successful in step 304,then the serving BTS assigns and/or transmits one or more TGID codes to the MS 112, related to location-specific group calls in its coverage area, as in step 308. The MS 112 receives the new TGID code(s) in step 310, and updates its scan list, as shown in step 312. If the MS wishes to initiate a location-specific group call, the MS then uses the newly assigned TGID code.

In the meantime, the MS intermittently scans the frequencies identified on the updated scan list, awaiting notification of a particular group call, as in step 314. In the case of TETRA talk group scanning, scanning takes place on control channels, such as the main control channel (MCCH) or a secondary control channel (e.g. the packet data channel) or associated secondary (e.g. traffic) channel. Such scanning may encompass different frequencies, time slots, time frames, or codes, etc. dependent upon the communication system employing the inventive concepts herein described. Re-scanning is continued in step 316, until a group call notification is received and the MS 112 joins the location-specific group call, as shown in step 318.

In this manner, location-specific (or geographically-constrained) communications are implemented using a new group-call mechanism. Advantageously, the methods prevent unnecessary transmission of extraneous broadcast information, such as the area-selection field, using bandwidth that could be utilised for other purposes.

In the above embodiments, the TGID code and group call mechanism are appropriate to the TETRA radio system described. However, it will be appreciated that alternative group call mechanisms may utilise the inventive concepts herein described.

As mentioned, the present invention finds particular application in a private mobile radio communication system such as TETRA. However, the inventive concepts contained herein are equally applicable to alternative fixed or cellular communication systems such as the Universal Mobile Telecommunications Standard (UMTS), and the Global System for Mobile communications (GSM) and any derivatives thereof that provide for group-type communications.

It will be understood that the location-specific talk-group calling mechanism, as described above, provides at least the following advantages:
(i) Allows site-wide group calling from both MSs and console dispatchers.
(ii) Full inter-operability (IOP) for MSs compliant with the TETRA DGNA standard is achieved.
(iii) There is no requirement to program MSs with specific call areas, as call area definition is centrally and dynamically controlled in, for example, the respective BTSs.
(iv) Fast call set up is achieved for site wide calls.
   As such, calls are set up as only group calls, with no special provisions for a site-wide set up process required.
(v) Supports the provision of simple location based information services, i.e. traffic reports broadcast to all users or types of users located within the cell.
(vi) Provides improved secure operation as area talk-groups are assigned after the MS has attached onto the system, i.e. an opportunity to assign or identify specific group cipher keys (GCK), used to encrypt group communication, for location-specific talk-groups.
(vii) Supports selective calling within dynamically defined call areas.

Thus, a flexible location-specific calling mechanism has been described wherein the aforementioned limitations and disadvantages associated with prior art arrangements have been substantially alleviated. In particular, a method of providing a communication link in a radio communication system supporting a number of communication cells has been described. Each cell provides communication from respective serving communication units to a number of remote communication units operating in a respective cell. The method includes the steps of assigning dynamically a location specific group identification code to a group of communication units based upon said communication units' location or cell within the radio communication system, and providing group communication to said group of remote communication units only within said remote communication units' location or cell.

In addition, a communication unit, for example an MS or BTS, has been described that has been adapted to perform the aforementioned steps.

Furthermore, a communication system has been described that has been adapted to perform the aforementioned steps.

Whilst specific, and preferred, implementations of the present invention are described above, it is clear that one skilled in the art could readily apply variations and modifications of such inventive concepts.

## Claims

1. A method of providing a communication link in a radio communication system (100) supporting a number of communication cells, wherein each cell provides communication from respective serving communication units (122-132) to a number of remote communication units (112-116) operating in a respective cell, the method comprising the steps of:
assigning (308) dynamically a location specific group identification code to a group of communication units based upon said communication units' location or cell within the radio communication system (100); and
providing group communication to said group of remote communication units (112-116) only within said remote communication units' location or cell.

2. The method of providing a communication link in a radio communication system according to Claim 1, wherein the step of assigning includes the steps of:
transmitting, from a serving communication unit (122), said location specific group identification code to one or more remote communication units (112) from the group of remote communication units operating within the cell served by said serving communication unit;
receiving (310) said location specific group identification code at one or more remote communication units; and
adding (312) said location specific group identification code to a scan list for subsequent use in group communication.

3. The method of providing a communication link in a radio communication system according to Claim 2, the method further comprising the step of:
scanning (314), by said one or more remote communication units (112) from the group of remote communication units (112-116), a communication resource of said communication system to determine a location specific group call message intended for said one or more remote communication units.

4. The method of providing a communication link in a radio communication system according to any preceding Claim, wherein the radio communication system operates in accordance with one or more of the TETRA, APCO25 or UMTS communications standards, the communications units are base transceiver stations (BTS), and the remote communication units are mobile stations (MS).

5. The method of providing a communication link in a radio communication system according to any preceding Claim, wherein a system operator performs the step of assigning dynamically a location specific group identification code to a group of communication units in order to centrally manage system calling areas and area talkgroups to meet changing system operational needs.

6. The method of providing a communication link in a radio communication system according to any preceding Claim, the method further comprising the steps of:
a remote communication unit (112) from the group of remote communication units re-registering (302) on a new cell, when moving into a new cell or coverage area; and
overwriting said location specific group identification code from said previous cell with a new location specific group identification code.

7. The method of providing a communication link in a radio communication system according to any preceding Claim, the method further comprising the steps of:
segregating a number of remote communication units (MS) within a cell by allocating different area location specific group identification codes based upon currently selected talkgroups or MS identification.

8. The method of providing a communication link in a radio communication system according to any preceding Claim, wherein said group call communication is between a plurality of said remote communication units or a plurality of said remote communication units and a console dispatcher.

9. The method of providing a communication link in a radio communication system according to any preceding Claim, the method further comprising the step of:
using said location-specific group identification code(s) to support a location based information service, for example traffic reports broadcast to all users or types of users located within a cell.

10. A storage medium storing processor-implementable instructions for controlling a processor to carry out the method of any of claims 1 to 9.

11. A communication unit adapted to facilitate the performance of any of the methods of claims 1 to 9.

12. A communication system adapted to facilitate the performance of any of the methods of claims 1 to 9.
